# EUROPEAN PATENT SPECIFICATION

(11) **EP 0 393 978 B1**
(45) Date of publication and mention of the grant of the patent: **19.06.1996**
(21) Application number: 90304093.9
(22) Date of filing: 17.04.1990
(51) Int. Cl.: G11B 7/12, G11B 11/10

(54) **Optical information recording-reproducing apparatus**
Optisches Informationsaufzeichnungs-/Wiedergabegerät
Appareil optique d'enregistrement/reproduction d'information

(30) Priority: 17.04.1989 JP 95230/89
(43) Date of publication of application: 24.10.1990
(73) Proprietor: CANON KABUSHIKI KAISHA, Tokyo (JP)
(72) Inventor: Suzuki, Yasuo, c/o Canon Kabushiki Kaisha, Tokyo (JP)
(74) Representative: Beresford, Keith Denis Lewis

(56) References cited:
- EP-A- 0 109 194
- EP-A- 0 226 403
- US-A- 4 406 520
- Schröder Technische Optik p.56

## Description

### BACKGROUND AND SUMMARY OF THE INVENTION

This invention relates to an optical head provided in the head unit of an optical information recording-reproducing apparatus such as a magneto-optical disk apparatus.

Along with the present day development of optoelectronics, there have been manufactured optical information recording-reproducing apparatus capable of recording and/or reproducing and/or erasing audio or image formation at a high performance and at random by the use of a light beam.

For example, in an optical video apparatus, recorded information comprising a projection (pit) pattern on a disk surface formed of transparent acrylic resin, transparent polycarbonate or the like is detected by an optical head and is photoelectrically converted, whereafter it is properly gain-adjusted by an amplifier and is further converted into a predetermined analog amount through a reproducing circuit such as a D-A converter, whereafter it is output by the use of an output device.

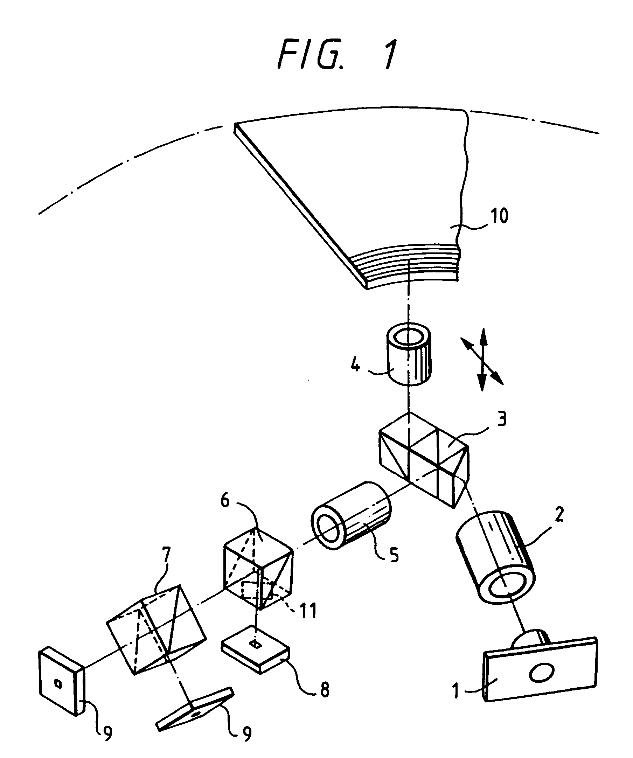

Originally, an optical head displays its function as an optical head only by having various optical parts being mounted therein. As shown, for example, in Figure 1 of the accompanying drawings, a semiconductor laser 1 and a collimator lens (mounted in a collimator lens barrel 2) are adjusted, or as also shown in Figure 1, polarizing beam splitters (PBS's) 3, 6, 7, an objective lens (mounted in an objective lens barrel 4), a condensing lens barrel 5, a servo sensor 8 for obtaining the focus control signal and/or the tracking control signal of a light beam directed to a recording medium, and an RF sensor (a magneto-optical signal detecting sensor) 9 for obtaining the reproduced signal of information recorded on the recording medium are mounted in the head body.

Figure 1 is a perspective view showing the arrangement of optical parts in an optical head according to the prior art.

Here, a beam condensed by the condensing lens 5 passes through the polarizing beam splitter 6 and further passes through a toric lens 11 adhesively secured to the polarizing beam splitter 6 and reaches the servo sensor 8. To narrow the pull-in range of the focus and increase the sensitivity of the focus when a focus error signal is obtained by the servo sensor, it is necessary to make the focal length (back focal length) of the condensing lens 5 great and also necessary to bring the radiuses of the meridional line and latitudinal line of the toric lens 11 close to each other. However, to provide a compact and light-weight optical head, it is necessary to shorten the distance from the condensing lens 5 to the servo sensor 8 and therefore, there has been a construction as shown, for example, in Figure 1 wherein the toric lens 11 is adhesively secured to the polarizing beam splitter 6.

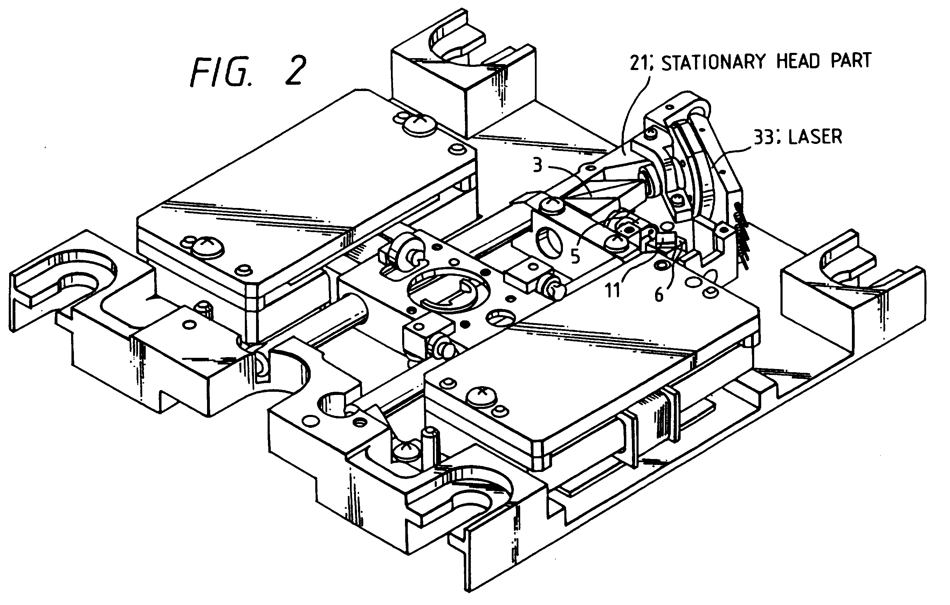

However, in the so-called separation optical type as shown in Figure 2 of the accompanying drawings which has a fixed head portion 21 in which a laser 33, etc. are fixed to the apparatus body, if instead of adopting an arrangement similar to the so-called unitary type in which a laser, an objective lens, etc. are made into a unitary construction, an attempt is made to narrow the pull-in range of the focus and thereby increase the focus sensitivity, the distance from the condensing lens 5 to the servo sensor 8 will become long. Particularly, the distance from the toric lens 11 to the servo sensor 8 will also become long, and this will pose a serious problem when making the drive device compact from a full height size to a half height size.

Further, the adjustment of the toric lens 11 to the optic axis is effected through the polarizing beam splitter 6 and therefore, the error is increased, and in the combined use type wherein the sensor 8 obtains a focus error signal and a tracking error signal, this has led to a problem that the leak from the tracking error signal into the focus error signal, i.e., the so-called cross talk amount, becomes great.

The present invention has been made in view of the above-noted problems and an object thereof is to provide an optical head in which it is possible to increase the accuracy of adjustment of a condensing lens barrel and a toric lens on the optic axis and reduce the cross talk amount and to make a drive device compact.

The above object is achieved by the following optical information recording-reproducing apparatus of the present invention.

The optical information recording apparatus for recording information on an optical information recording medium, or an optical information recording apparatus for reproducing information recorded on an optical information recording medium, or an optical information recording and reproducing apparatus for recording information on and reproducing information from an optical information recording medium of the present invention comprises:
a light source unit for producing a light beam for application to an optical information recording medium;
first optical means disposed in an optical path leading from said light source unit to the optical information recording medium for directing the light beam from said light source unit to the optical information recording medium; and for directing light reflected from the recording medium to optical condensing means including a toric or a cylindrical lens; and
means for directing the light beam condensed by said condensing means onto a light receiving member in a direction perpendicular to the optical information recording medium to obtain at least a focus signal from the light beam directed to the optical information recording medium;
said apparatus being characterised in that said optical condensing means comprises:
a first condensing lens with a lens barrel for holding said first condensing lens, said toric or cylindrical lens being adhesively secured to a front surface of said lens barrel, said optical condensing means being arranged to direct the light beam to said means for directing.

More particularly, the apparatus of the present invention is characterized in that a toric lens or a cylindrical lens is joined to a condensing lens barrel provided on the optical path of the light beam after passed through the optical information recording medium, at the emerging position of the light beam passed through said lens barrel.

### BRIEF DESCRIPTION OF THE DRAWINGS

Figure 1 shows the arrangement of optical parts in an example of the optical head according to the prior art.

Figure 2 shows the arrangement of optical parts in a separating optical system according to the prior art.

Figure 3 shows the arrangement of optical parts in an embodiment of an optical head used in an optical information recording-reproducing apparatus according to the present invention.

Figure 4 is a front view of a condensing lens barrel and a toric lens.

Figure 5 is a perspective view showing an embodiment of the separating optical system of the present invention.

### DESCRIPTION OF THE PREFERRED EMBODIMENTS

An embodiment of the present invention will hereinafter be described specifically in detail with reference to the drawings.

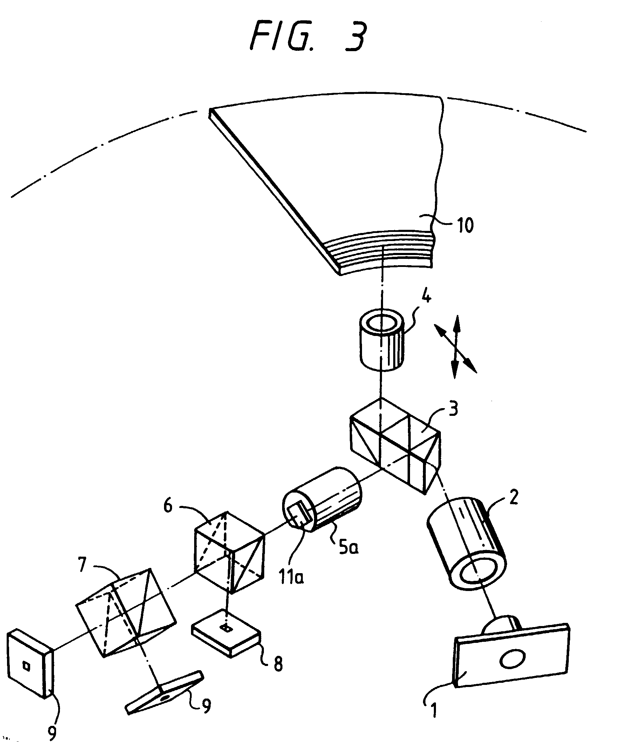

Figure 3 shows the arrangement of optical parts in an embodiment of an optical head used in an optical information recording-reproducing apparatus according to the present invention.

In Figure 3, members identical to those in Figure 1 are given common reference numerals and need not be described.

As shown in Figure 3, in the present invention, a toric lens 11a is adhesively secured to a condensing lens barrel 5a. In the present embodiment, the toric lens 11a is mounted on the emergence side of the condensing lens barrel 5a in the direction of travel of a light beam reflected by disk 10 which is an optical information recording medium. Thus, the toric lens is joined to a holding member for holding the condensing lens.

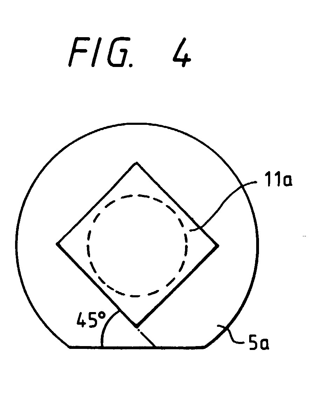

Various methods of adjusting the mounted position of the toric lens and various methods of adhesively securing the toric lens are conceivable, but for example, as shown in Figure 4, the center of the condensing lens barrel 5a and the center of the toric lens 11a (or a cylindrical lens) may be made coincident with each other and further, the toric lens may be adhesively secured with the angle of the end edge portion of the toric lens 11a (or a cylindrical lens) with respect to the D-cut surface of the condensing lens barrel 5a being adjusted suitably (in the present embodiment, to 45°). Thus, the condensing lens and the toric lens are made integral with each other by the condensing lens barrel.

If the toric lens 11a is thus adhesively secured to the condensing lens barrel 5a, the focal length (the back focal length) of the condensing lens can be made long, and even in an optical system wherein radiuses of the meridional line and latitudinal line of the toric lens are brought close to each other to thereby increase the focus sensitivity, it is possible to shorten the distance from a polarizing beam splitter 6 for separating a light beam for RF and a light beam for servo from each other to a servo sensor 8 for obtaining the focus control signal and/or the tracking control signal of a light beam directed to the recording medium. Accordingly, compactness of the optical head can be achieved. This also results in better assembling work efficiency than in a case where the toric lens is directly joined to the condensing lens.

Further, the accuracy of adjustment to the optic axis is more improved than in the example shown in Figure 1 wherein the toric lens 11 is adhesively secured to the polarizing beam splitter 6 and therefore, in the combined use type wherein the sensor 8 obtains a focus error signal and a tracking error signal, the leakage of a tracking signal into a focusing signal, i.e., the so-called cross talk amount, is reduced and the reliability of AF (auto focusing) and AT (auto tracking) control is improved.

While in the present embodiment, description has been made of the toric lens 11a, a similar effect is also obtained when a cylindrical lens, instead of the toric lens, is employed. Description has also been made of a head for a magneto-optical recording-reproducing apparatus, but a similar effect is obtained with respect to a system such as an optical disk in which focus control by astigmatism is effected in a continuous servo.

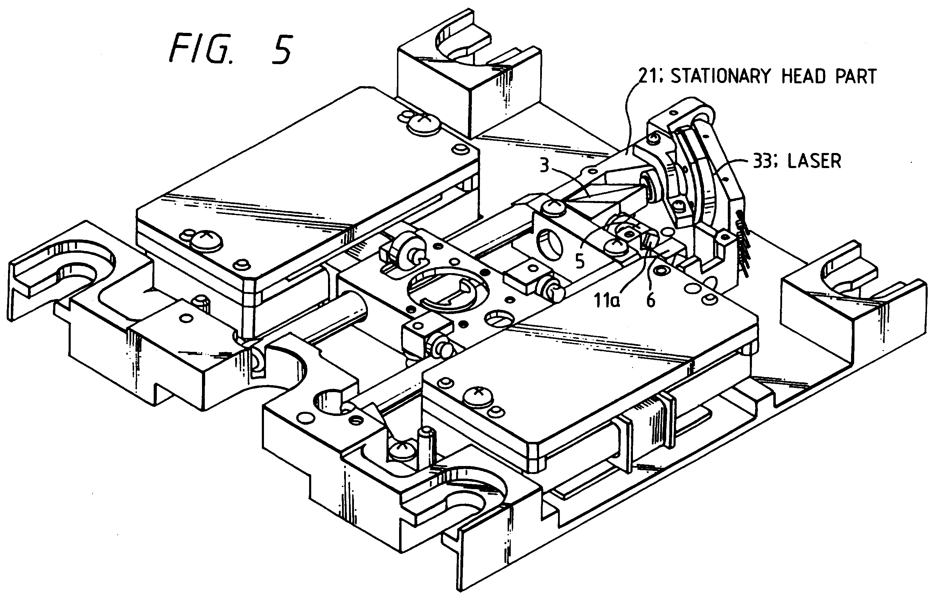

Figure 5 shows an optical information recording-reproducing apparatus using a separating optical system which is another embodiment of the present invention. In this system, the distance from the polarizing beam splitter 6 to a servo sensor (not shown) is short and therefore, compactness with respect to the direction of height of the drive device can be achieved.

Thus, in the optical information recording-reproducing apparatus of the present invention, the toric lens or the cylindrical lens is joined to the condensing lens barrel provided on the optical path of the light beam after passed through the optical information recording medium, at the emerging position of the light beam passed through said lens barrel.

If such a construction is adopted, particularly when the light beam passed through this condensing lens barrel is received by a so-called AF-AT type sensor for obtaining AF (auto focusing) and AT (auto tracking) control signals, the accuracy of adjustment of a lens having an amorphic power differing in power between two directions orthogonal to each other, such as a toric lens or a cylindrical lens, with respect to the optic axis of the condensing lens in the condensing lens barrel is good and therefore, the leakage of the tracking signal into the focusing signal, i.e., the so-called cross talk amount, is reduced.

As described in detail above, a toric lens or a cylindrical lens is adhesively secured to a condensing lens barrel comprising a condensing lens for condensing a light beam directed to an optical information recording medium and passed through the medium and a holding member for holding the condensing lens, whereby the compactness of an optical head used in an optical information recording-reproducing apparatus and a reduction in the cross talk amount can be achieved.

## Claims

1. An optical information recording apparatus for recording information on an optical information recording medium, or an optical information recording apparatus for reproducing information recorded on an optical information recording medium, or an optical information recording and reproducing apparatus for recording information on and reproducing information from an optical information recording medium comprising:
a light source unit (1,2) for producing a light beam for application to an optical information recording medium (10);
first optical means (3) disposed in an optical path leading from said light source unit (1,2) to the optical information recording medium (10) for directing the light beam from said light source unit (1,2) to the optical information recording medium (10); and for directing light reflected from the recording medium to optical condensing means (5a, 11a) including a toric or a cylindrical lens (11a); and
means (6) for directing the light beam condensed by said condensing means (5a, 11a) onto a light receiving member (8) in a direction perpendicular to the optical information recording medium (10) to obtain at least a focus signal from the light beam directed to the optical information recording medium (10);
said apparatus being characterised in that said optical condensing means comprises:
a first condensing lens with a lens barrel (5a) for holding said first condensing lens, said toric or cylindrical lens (11a) being adhesively secured to a front surface of said lens barrel (5a), said optical condensing means being arranged to direct the light beam to said means (6) for directing.

2. An apparatus according to claim 1, wherein said front surface is D-cut.

3. An apparatus according to claim 2, wherein an end edge portion of said toric or cylindrical lens (11a) is arranged at substantially 45° with respect to the flat portion of said D-cut surface.

4. An apparatus according to any one of the preceding claims including:
a second optical deflector means (6) arranged to separate the light beam condensed by said optical condensing means into a first direction and a second direction differing from said first direction;
wherein said first light receiving member (8) is arranged to obtain the focus control signal and/or the tracking control signal of the light beam directed to the optical information recording medium; and
a second light receiving member (9) is arranged to receive the light beam separated into said second direction by said second optical deflector means (6) to obtain the reproduced information signal recorded on said optical information recording medium (10).

## Patentansprüche

1. Optisches Informationsaufzeichnungsgerät für das Aufzeichnen von Informationen auf einem optischen Informationsaufzeichnungsmedium oder optisches Informationsaufzeichnungsgerät zum Wiedergeben der auf einem optischen Informationsaufzeichnungsmedium aufgezeichneten Information oder optisches Informationsaufzeichnungs- und -wiedergabegerät zum Aufzeichnen von Informationen auf und Wiedergeben von Informationen von einem optischen Informationsaufzeichnungsmedium mit:
einer Lichtquelleneinheit **(1, 2)** zum Erzeugen eines Lichtstrahls zum Einwirken auf ein optisches Informationsaufzeichnungsmedium **(10)**,
einer ersten optischen Einrichtung **(3)**, angeordnet in einem optischen Pfad, welcher von der Lichtquelleneinheit **(1, 2)** zu dem optischen Informationsaufzeichnungsmedium **(10)** führt, zum Ausrichten des Lichtstrahls von der Lichtquelleneinheit **(1, 2)** auf das optische Informationsaufzeichnungsmedium **(10)** und zum Ausrichten des von dem Aufzeichnungsmedium reflektierten Lichts auf die optische Kondensoreinrichtung **(5a, 11a)** mit einer Punktallinse oder einer Zylinderlinse **(11a)**, und
einer Einrichtung **(6)** zum Ausrichten des durch die Kondensoreinrichtung **(5a, 11a)** gesammelten Lichtstrahls auf ein Lichtaufnahmeelement **(8)** in eine Richtung senkrecht zu dem optischen Informationsaufzeichnungsmedium **(10)**, um mindestens ein Lichtpunktsignal von dem auf das optische Informationsaufzeichnungsmedium **(10)** gerichteten Lichtstrahl zu erlangen, wobei das Gerät **dadurch gekennzeichnet ist, daß** die optische Kondensoreinrichtung aufweist:
eine erste Kondensorlinse mit einer Linsenfassung **(5a)** zum Halten der ersten Kondensorlinse, wobei die Punktallinse oder die Zylinderlinse **(11a)** durch Klebverbindung an einer Vorderfläche der Linsenfassung **(5a)** angeordnet ist, und die optische Kondensoreinrichtung vorgesehen ist, um den Lichtstrahl zum Ausrichten zur Einrichtung **(6)** zu lenken.

2. Gerät gemäß Anspruch 1, wobei die Vorderfläche einen D-Schnitt aufweist.

3. Gerät gemäß Anspruch 2, wobei ein Endkantenabschnitt der Punktallinse oder der Zylinderlinse **(11a)** im wesentlichen im Winkel von 45° mit Bezug zu dem flachen Abschnitt der D-Schnitt-Oberfläche angeordnet ist.

4. Gerät gemäß einem der vorausgehenden Ansprüche mit
einer zweiten optischen Strahlteileinrichtung **(6)**, angeordnet, um den durch die optische Kondensoreinrichtung gesammelten Lichtstrahl in eine erste Richtung und eine zweite Richtung, welche sich von der ersten Richtung unterscheidet, aufzuteilen,
wobei das erste Lichtaufnahmeelement **(8)** angeordnet ist, um das Lichtpunktsteuersignal und/oder das Spurverfolgungs-Steuersignal des auf das optische Informationsaufzeichnungsmedium gerichteten Lichtstrahls zu erlangen, und
ein zweites Lichtaufnahmeelement **(9)** angeordnet ist, um den Lichtstrahl aufzunehmen, welcher durch die zweite optische Strahlteileinrichtung **(6)** in die zweite Richtung aufgeteilt ist, um das auf dem optischen Informationsaufzeichnungsmedium **(10)** aufgezeichnete, reproduzierte Informationssignal zu erhalten.

## Revendications

1. Appareil optique d'enregistrement d'information pour enregistrer une information sur un support optique d'enregistrement d'information, ou appareil optique d'enregistrement d'information pour reproduire l'information enregistrée sur un support optique d'enregistrement d'information, ou appareil optique d'enregistrement et de reproduction d'information pour enregistrer une information sur un support optique d'enregistrement d'information et reproduire une information à partir de celui-ci, comprenant:
une unité (1, 2) formant source de lumière pour produire un faisceau lumineux destiné à être appliqué à un support optique (10) d'enregistrement d'information;
un premier moyen optique (3) disposé dans un trajet optique situé entre ladite unité (1, 2) formant source de lumière et le support optique (10) d'enregistrement d'information pour diriger le faisceau lumineux provenant de ladite unité (1, 2) formant source de lumière vers le support optique (10) d'enregistrement d'information; et pour diriger la lumière réfléchie par le support d'enregistrement sur un moyen de condensation optique (5a, 11a) comportant une lentille torique ou cylindrique (11a) ; et
un moyen (6) pour diriger le faisceau lumineux condensé par ledit moyen de condensation (5a, 11a) sur un élément (8) récepteur de lumière dans une direction perpendiculaire au support optique (10) d'enregistrement d'information pour obtenir au moins un signal de focalisation à partir du faisceau lumineux dirigé vers le support optique (10) d'enregistrement d'information;
ledit appareil étant caractérisé en ce que ledit moyen de condensation optique comprend:
une première lentille de condensation avec un tube d'objectif (5a) pour maintenir ladite première lentille de condensation, ladite lentille torique ou cylindrique (11a) étant fixée par adhésif à la surface frontale dudit tube d'objectif (5a), ledit moyen de condensation optique étant agencé pour diriger le faisceau lumineux vers ledit moyen (6) de direction.

2. Appareil selon la revendication 1, dans lequel ladite surface frontale est découpée en forme de D.

3. Appareil selon la revendication 2, dans lequel une partie de bord d'extrémité de ladite lentille torique ou cylindrique (11a) est disposée sensiblement à 45° par rapport à la partie plate de ladite surface découpée en forme de D.

4. Appareil selon l'une quelconque des revendications précédentes comportant:
un second moyen déflecteur optique (6) disposé pour séparer le faisceau lumineux condensé par ledit moyen de condensation optique dans une première direction et une seconde direction différente de ladite première direction;
dans lequel ledit premier élément (8) récepteur de lumière est disposé pour obtenir le signal de commande de focalisation et/ou le signal de commande de suivi de piste du faisceau lumineux dirigé vers le support optique d'enregistrement d'information; et
un second élément (9) récepteur de lumière est disposé pour recevoir le faisceau lumineux séparé dans ladite seconde direction par ledit second moyen déflecteur optique (6) afin d'obtenir le signal d'information reproduit enregistré sur ledit support optique (10) d'enregistrement d'information.
